# FASCICULE DE BREVET EUROPEEN

(11) **EP 1 034 946 B1**
(45) Date de publication et mention de la délivrance du brevet: **12.02.2003**
(21) Numéro de dépôt: 00104052.6
(22) Date de dépôt: 28.02.2000
(51) Int. Cl.: B60C 11/12, B60C 11/13, B29C 33/42, B29C 33/44

(54) **Sculpture de bande de roulement et moule**
Profil für Reifenlauffläche und Formwerkzeug dafür
Tyre tread pattern and mould therefor

(30) Priorité: 10.03.1999 FR 9903051
(43) Date de publication de la demande: 13.09.2000
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: Merino Lopez, José, 63200 Riom (FR)
(74) Mandataire: Diernaz, Christian

(56) Documents cités:
- EP-A- 0 342 908
- EP-A- 0 858 875
- FR-A- 2 759 323
- US-A- 1 733 064
- US-A- 2 264 767
- US-A- 2 575 439

## Description

L'invention concerne une sculpture pour une bande de roulement destinée à un pneumatique pour véhicule poids lourd; elle concerne également un moule permettant l'obtention d'une telle sculpture par moulage.

Pour maintenir, voire accroître, la performance d'une sculpture de bande de roulement de pneumatique comportant des éléments de relief dans des conditions de roulage sur sol glissant (comme par exemple un sol revêtu d'eau), il est connu de réaliser sur lesdits éléments une pluralité de découpures sous la forme de rainures et/ou d'incisions (une incision ayant une largeur inférieure à la largeur d'une rainure et en règle générale la largeur d'une incision est inférieure à **3** mm). Ces découpures traversent en totalité la largeur de la nervure pour relier entre elles les rainures délimitant lesdites nervures.

Il est également connu que la performance sur sol glissant est améliorée quand le nombre de découpures est important; toutefois, un trop grand nombre de découpures conduit à une grande diminution de rigidité des éléments de relief ce qui se traduit par une perte de performance générale même sur sol non glissant. En effet, cette diminution de rigidité occasionne des mouvements d'amplitude plus grande pour les points de la sculpture en contact avec le sol, ce qui provoque, entre autres inconvénients, des usures dites irrégulières en ce sens qu'elles sont localisées (en particulier sur les arêtes des nervures) et non plus uniformément réparties sur la totalité de la surface de roulement de la bande de roulement. Ces usures irrégulières réduisent de façon sensible la durée d'utilisation du pneumatique pourvu de ladite sculpture.

Il est également connu que les répartitions de pression de contact entre chaque élément de relief d'une sculpture de bande de roulement et le sol ont une incidence directe sur la régularité de l'usure de ladite bande. Par exemple, dans le cas d'une sculpture de bande de roulement pourvue d'une pluralité de nervures délimitées par des rainures d'orientation sensiblement longitudinale (correspondant à la direction circonférentielle sur le pneumatique), il est connu de mouler des rainures qui, vues en section droite, présentent des largeurs allant en augmentant au fur et à mesure de l'usure de la bande de roulement. Par définition, les parois des éléments de relief délimitées par de telles rainures sont dites en contre dépouille par rapport à la surface de roulement de la bande.

Cette disposition permet d'assouplir les nervures au voisinage de leurs arêtes (définies comme étant les intersections des parois latérales de chaque nervure avec sa surface de paroi destinée à venir en contact avec le sol) et ainsi de réduire les pressions de contact de chaque nervure avec le sol près desdites arêtes. Cette réduction de pression est plus particulièrement sensible quand la bande de roulement est neuve, c'est-à-dire quand l'épaisseur de la bande est maximale.

Cependant, si l'on pourvoit cette dernière sculpture d'une pluralité d'incisions pour accroître la performance d'adhérence sur sol glissant, alors la combinaison d'une faible pression au voisinage des arêtes des nervures avec des mouvements de grande amplitude liés à la présence desdites incisions conduit à des usures irrégulières très prononcées de ces nervures au voisinage de leurs arêtes.

Une façon connue d'éviter cette usure irrégulière est de réaliser une pluralité d'incisions débouchant uniquement sur la paroi de surface des nervures sans couper les parois latérales et les arêtes des nervures; toutefois, cette disposition conduit à des problèmes de bruit liés à l'emprisonnement d'air à l'intérieur desdites incisions dans le passage du contact avec le sol pendant le roulage.

Un objectif de l'invention est de proposer une bande de roulement pour pneumatique dont la sculpture comporte une pluralité d'éléments de relief limités par au moins deux rainures et dont au moins deux de ses parois latérales sont en contre dépouille, certains desdits éléments de relief étant pourvus d'au moins une incision débouchant sur la surface de roulement de la bande à l'état neuf, ladite bande de roulement ne présentant pas les inconvénients qui viennent d'être rappelés.

Il est proposé une bande de roulement pour pneumatique pourvue d'une sculpture comportant une pluralité d'éléments de relief délimités par des rainures, chaque élément de relief étant pourvu d'une paroi de surface formant une partie de la surface de roulement et destinée à venir en contact avec le sol au cours du roulage et d'au moins deux parois latérales en contre dépouille par rapport à la paroi de surface, l'intersection de chacune des parois latérales avec la paroi de surface formant une arête.

La bande de roulement selon l'invention est caractérisée en ce que :
- au moins un élément de relief est pourvu d'au moins une incision débouchant sur sa paroi de surface et sur au moins une de ses parois latérales et
- en ce que la/les incision(s) ne coupe(nt) pas l'arête commune à ladite paroi de surface et à ladite paroi latérale au moins entre une première profondeur **H1** et une seconde profondeur **H2, H2** étant supérieure à **H1,** ces profondeurs **H1** et **H2** étant mesurées perpendiculairement à la paroi de surface de l'élément et correspondant à des niveaux d'usure différents de la bande de roulement.

Au moins deux des parois latérales d'un même élément de relief sont en contre dépouille c'est-à-dire qu'elles sont inclinées d'une façon telle que la largeur de la paroi de surface dudit élément diminue au fur et à mesure de l'usure de la bande de roulement.

La sculpture selon l'invention permet d'améliorer les performances de la sculpture sur un sol rendu glissant grâce à un nombre d'incisions qui peut être important, sans créer de problème de bruit ni d'usure irrégulière sur sol sec. Chaque élément de relief de la sculpture selon l'invention peut comporter une pluralité d'incisions débouchant à la fois sur la surface de contact de l'élément avec le sol et dans au moins l'une des rainures délimitant l'élément de relief pour permettre l'évacuation, vers au moins l'une desdites rainures, des fluides rentrant dans l'incision pendant le roulage.

Il est à noter qu'en règle générale la profondeur maximale des incisions est quasiment égale à la profondeur des rainures délimitant les éléments de relief pour bénéficier d'un grand nombre d'arêtes pendant toute la durée d'utilisation de la bande de roulement; cependant, il est bien sûr possible de prévoir des profondeurs différentes.

De façon préférentielle, la profondeur **H1** est faible devant la profondeur de l'incision considérée, de manière à conserver une rigidité suffisante à l'élément de relief en particulier lorsque cet élément est soumis à des efforts de contact avec le sol dirigés parallèlement au sol et dans une direction perpendiculaire à l'orientation moyenne de l'incision; par faible, on entend que **H1** est au plus égal à **10%** de la plus profonde des découpures (rainures et incisions comprises).

Chaque incision présente sur la surface de roulement un tracé géométrique ayant une orientation moyenne définie comme étant l'angle que fait, avec la direction longitudinale de la bande de roulement, le segment de droite joignant les points dudit tracé les plus éloignés l'un de l'autre.

La sculpture selon l'invention présente l'avantage de réduire de façon perceptible le bruit de roulement sur sol sec créé par la présence des incisions par le fait que ces incisions débouchent dans au moins une rainure et peuvent ainsi évacuer l'air qu'elles contiennent au moment de leur passage dans le contact avec le sol.

Cette sculpture présente, malgré le grand nombre d'incisions, l'avantage de modifier assez peu la répartition des pressions de contact de chaque élément sur le sol en particulier près des arêtes tout en atténuant la diminution de rigidité pendant la première partie d'utilisation de la bande de roulement (c'est-à-dire jusqu'à environ un niveau d'usure correspondant à la moitié de l'épaisseur de ladite bande).

Un bon compromis entre le maintien d'une rigidité suffisante pour un élément de relief et une évacuation optimale des fluides contenus dans les incisions dudit élément de relief vers les rainures adjacentes est atteint dès lors que la profondeur **H2** est comprise entre **40%** et **90%** de la profondeur desdites incisions.

Préférentiellement, les incisions débouchant à la fois sur la paroi de surface et sur au moins une paroi latérale d'un élément de relief ne coupent aucune des arêtes dudit élément à l'état neuf (dans ce cas : **H1=0);** cette disposition a pour but de ne pas abaisser la rigidité de la bande au voisinage de la paroi de surface à l'état neuf.

Une variante particulièrement intéressante consiste à répartir sur un même élément de relief de la sculpture une pluralité d'incisions débouchant sur la paroi de surface de la bande de roulement à l'état neuf, de façon que ces incisions débouchent alternativement sur l'une puis sur l'autre paroi latérale dudit élément sans, par exemple, couper les arêtes de cet élément à l'état neuf. Ainsi après une usure partielle de l'élément de relief, les incisions débouchant sur la paroi de surface dudit élément ne coupent qu'une seule arête de l'élément, ce qui permet de maintenir un équilibre des rigidités de l'élément de relief entre un côté de l'élément de relief et l'autre en évitant un affaiblissement brutal desdites rigidités.

Pour réaliser une sculpture comportant au moins un élément de relief pourvu d'au moins une découpure débouchant sur la paroi de surface et sur une partie d'au moins une paroi latérale de cet élément, il est clair que les moules existant de pneumatiques ne sont pas adaptés, la principale difficulté résidant dans le démoulage des éléments moulants du moule sans provoquer de rupture des arêtes des éléments de relief. Par démoulage, on entend l'extraction de ces éléments moulants hors de la matière composant la bande après moulage et vulcanisation.

Une possibilité connue consiste à employer un matériau de remplissage pour le moulage de chaque incision avant d'éliminer ledit matériau après moulage; il faut cependant noter la difficulté de mise en oeuvre et le coût élevé d'une telle méthode dans une optique industrielle.

Un objectif de l'invention est de réaliser un moule pour effectuer le moulage d'une bande de roulement en gomme pourvue d'une telle sculpture directement pendant la phase de moulage et vulcanisation d'un pneumatique sans devoir nécessairement réaliser un moulage de la bande de roulement dans un moule moulant simultanément les faces interne et externe de cette bande. Ce mode de réalisation nécessite alors une étape d'assemblage avec une ébauche de pneumatique fabriquée séparément. Ceci est bien sûr particulièrement coûteux et n'est pas sans poser des problèmes de tenue de la liaison entre une bande prévulcanisée et une ébauche de pneumatique prévulcanisée ou non.

Le moule selon l'invention comporte une pluralité de pièces de moule ayant chacune leur direction propre de moulage/démoulage. Chaque pièce du moule présente une surface de moulage destinée à mouler une partie de la surface de roulement d'une bande de roulement. En outre, chaque pièce de moule est pourvue d'éléments de moulage faisant saillie sur sa surface de moulage. Des premiers éléments de moulage, destinés à mouler des rainures délimitant des éléments de relief de la sculpture, comportent des faces latérales et des faces d'extrémité limitant lesdites faces latérales; ces faces latérales sont destinées à mouler les parois latérales principales des éléments de relief sur la bande de roulement. Des deuxièmes éléments de moulage sont destinés au moulage de découpures dans les éléments de relief; ces éléments de moulage comportent également des faces latérales et des faces d'extrémités limitant lesdites faces latérales. Les faces latérales moulent les parois latérales de découpures d'orientation moyenne différente de l'orientation moyenne des rainures moulées par les premiers éléments de moulage.

Le moule selon l'invention se caractérise en ce que :
- au moins une face latérale d'un élément de moulage et une face d'extrémité d'un autre élément de moulage de la pièce de moule coopèrent de manière à être en contact et à délimiter, au moins partiellement, un orifice s'étendant entre une profondeur **H1** et une profondeur **H2 (H2** étant strictement supérieure à **H1)** pour laisser passer la gomme pendant le moulage d'une bande de roulement, lesdites profondeurs **H1** et **H2** étant mesurées à partir de et perpendiculairement à la surface de moulage de la pièce de moule, et
- l'un desdits éléments de moulage en contact avec l'autre élément moulant est monté mobile par rapport à la pièce de moule et à cet autre élément moulant suivant une direction voisine ou identique à la direction de moulage/démoulage de la pièce de moule, afin que, pendant une première phase du démoulage consistant à déplacer la pièce de moule dans sa direction de démoulage, les efforts résultants exercés par la gomme moulée dans chaque orifice sur l'élément moulant mobile contraignent ledit élément à rester dans la bande et ainsi à ne plus être en contact avec l'autre élément moulant de façon à permettre dans une deuxième phase du démoulage, l'extraction de l'élément moulant mobile hors de la bande et ainsi achever le démoulage sans rupture de la gomme moulée dans chaque orifice.

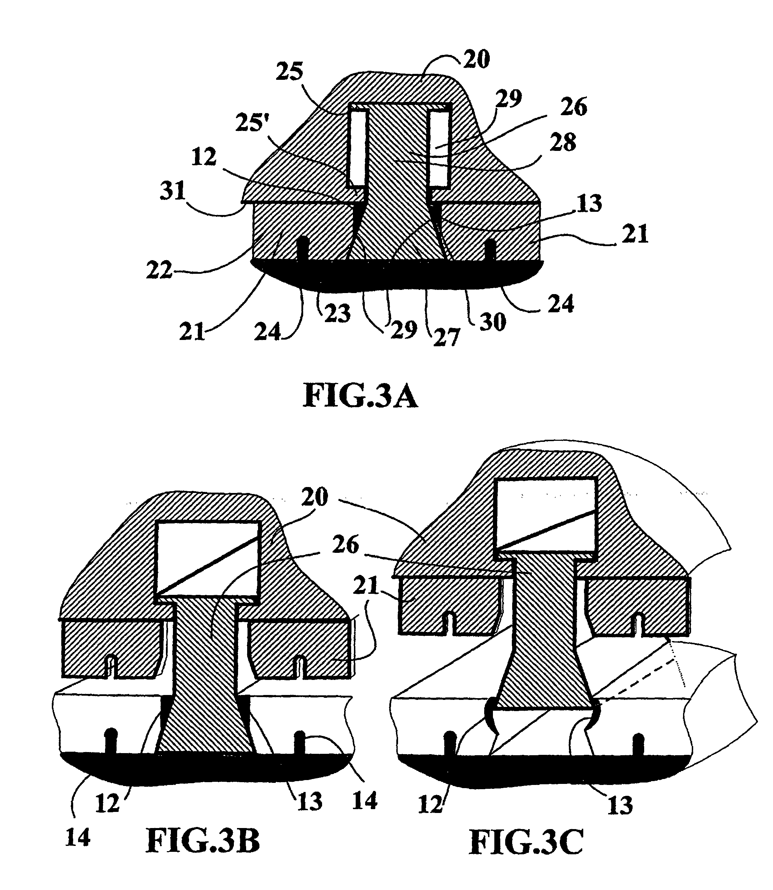

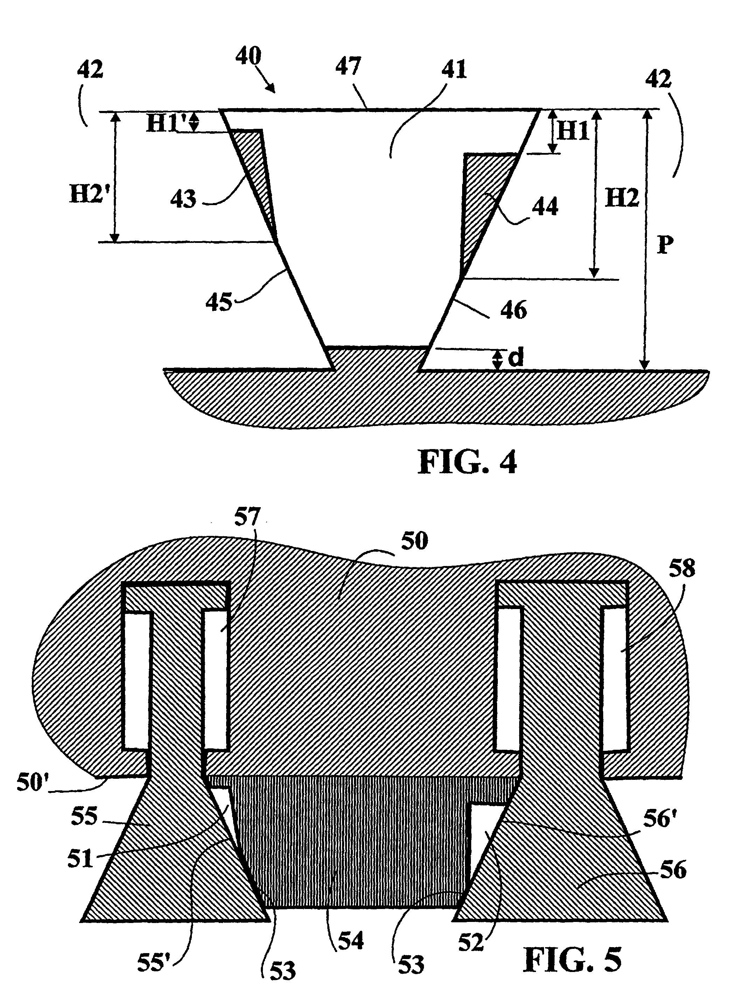

L'expression "délimiter, au moins partiellement, un orifice" signifie que l'orifice considéré est entièrement délimité par des parois de deux éléments moulants (cette configuration correspond, par exemple, à la variante présentée avec la figure 5), ou qu'il est délimité à la fois par des parois de deux éléments moulants et la surface de moulage de la pièce de moule pourvue desdits éléments moulants (cette dernière configuration correspond, par exemple, à la variante présentée avec les figures **3A, 3B, 3C**).

Un moule selon l'invention offre l'avantage de rendre possible industriellement le moulage d'une sculpture d'une bande de roulement ayant une sculpture dont au moins un élément de relief comporte deux de ses parois latérales en contre dépouille et est pourvu d'au moins une incision débouchant sur la paroi de surface et sur au moins une des parois latérales dudit élément au moins entre une première profondeur **H1** et une seconde profondeur **H2, H2** étant supérieure strictement à **H1.**

D'autres possibilités et avantages de la sculpture et du moule selon l'invention seront fournis avec les figures suivantes dont le but est de présenter de manière non limitative des variantes de réalisation :
- la figure **1** montre une partie d'une sculpture d'une bande de roulement selon l'invention comportant plusieurs nervures dont les parois latérales sont en contre dépouille;
- la figure **2** montre une coupe AA selon un plan perpendiculaire à la direction longitudinale de la bande de la figure **1;**
- les figures **3A, 3B et 3C** montrent des vues en coupe d'un moule pour mouler la sculpture représentée à la figure 1;
- la figure **4** montre une autre variante d'incision selon l'invention;
- la figure **5** montre une autre variante d'un moule selon l'invention pour mouler l'incision de la figure **4;**
- la figure **6** montre une variante de sculpture selon l'invention montrant des incisions débouchant alternativement sur deux parois latérales.

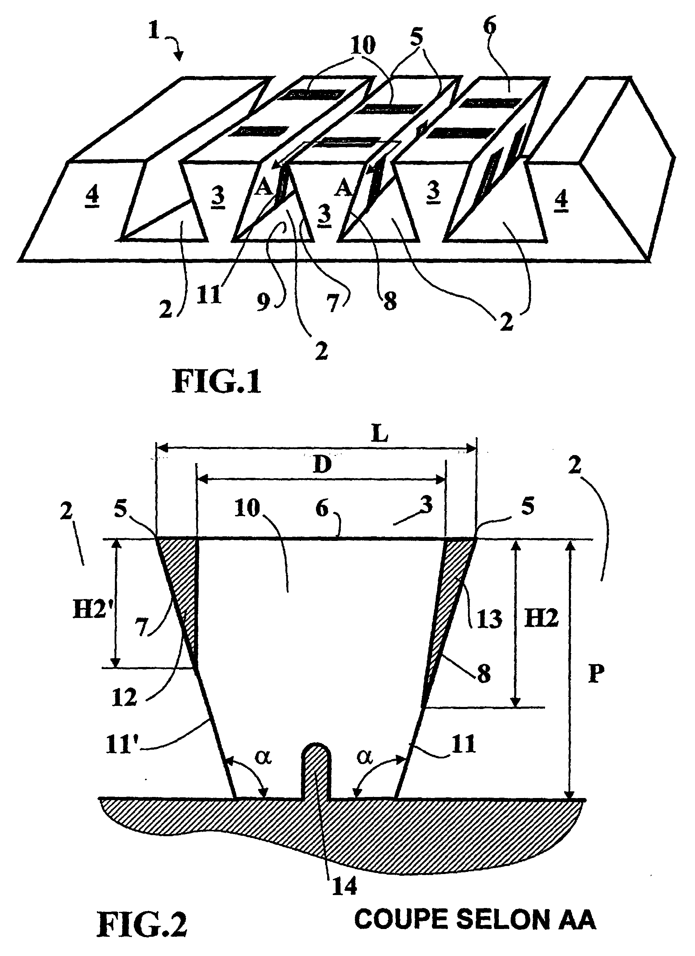

Sur la figure **1**, on distingue une portion d'une bande de roulement 1 à l'état neuf destinée à équiper un pneumatique, ladite bande étant pourvue d'une sculpture comportant trois nervures **3** dans la partie centrale et une nervure **4** sur chacun de ses deux bords. Chacune des trois nervures **3** est délimitée par deux rainures **2** de même profondeur **P** et dont les largeurs sur la surface de roulement de la bande vont en augmentant avec l'usure de ladite bande.

Chaque nervure **3** comporte une paroi de surface **6** destinée à venir en contact avec le sol au cours du roulage et deux parois latérales **7** et **8** en contre dépouille; les intersections des parois latérales **7** et **8** avec la paroi de surface **6** forment deux arêtes **5**.

En outre, chaque nervure **3** est pourvue d'une pluralité d'incisions débouchant sur la paroi de surface **6** sans couper les arêtes **5** de cette nervure à l'état neuf. Les traces de ces incisions **10** sur la paroi de surface **6** sont rectilignes et sont, dans la variante décrite, orientées transversalement c'est-à-dire perpendiculairement à la direction longitudinale. Chaque incision **10** débouche sur les parties inférieures des deux parois latérales d'une même nervure comme cela est d'ailleurs plus facilement visible sur la figure **2** montrant la coupe selon AA de cette sculpture.

Sur cette figure **2**, on aperçoit les traces des parois latérales **7** et **8** d'une nervure **3** qui sont inclinées par rapport au fond de la rainure d'un angle α, α étant ici plus grand que **90**° de façon à être en contre dépouille près de la paroi de surface **6**. L'incision **10** débouche sur la paroi de surface **6** sur une largeur D inférieure à la largeur L de la nervure et suivant un tracé moyen (par tracé moyen, on entend la ligne droite joignant les points extrêmes de l'incision sur la paroi de surface). Elle débouche sur la paroi **7** par la partie **11'** à partir d'une profondeur **H2'** et jusqu'au fond de la rainure **2.** L'incision **10** débouche également sur la parois **8** par la partie **11** à partir d'une profondeur **H2** et jusqu'au fond de la rainure **2**. Dans la variante montrée, les profondeurs **H2'** et **H2** sont différentes, mais elles pourraient bien sûr être identiques.

Les coins de gomme **12** et **13** situés près des arêtes **5** de la nervure et visibles sur la figure **2** ont des formes triangulaires et s'étendent entre la surface de roulement de la bande à l'état neuf (ce qui correspond à **H1** égal à zéro) et **H2** ou **H2'.** D'autres formes géométriques peuvent également être envisagées.

Ces coins de gomme maintiennent un niveau suffisant de rigidité de la nervure lorsque celle-ci est soumise à des efforts tangentiels dans la direction longitudinale par exemple dans le contact au sol. On distingue également un partie de gomme **14** située près du fond de l'incision et ayant pour fonction de limiter la diminution de rigidité de la nervure lorsqu'elle est à mi-usure.

Toutes les incisions ont, dans la variante présentée, sensiblement la même largeur **D** sur la surface de la bande de roulement à l'état neuf et la même profondeur que la profondeur **P** des rainures adjacentes.

Préférentiellement, **H2** et **H2'** sont compris entre **40%** et **90%** de la profondeur **P** des rainures de manière à limiter de façon efficace la diminution de rigidité due à la présence des incisions lorsque la bande est neuve et cela jusqu'à un certain niveau d'usure de ladite bande.

Chaque incision selon l'invention peut avoir, sur la paroi de surface d'un élément de relief, une forme variée comme par exemple une forme ondulée; de même, si l'on considère la forme de chaque incision dans l'épaisseur de la bande, ces incisions peuvent avoir des géométries planes ou courbes ou en zigzag.

L'orientation moyenne de cette incision (c'est-à-dire l'angle que fait le segment de droite joignant les point de l'incision les plus éloignés avec la direction longitudinale de la bande) sur la surface de roulement de la bande de roulement à l'état neuf peut faire avec la direction longitudinale de ladite bande un angle quelconque; préférentiellement cet angle est au moins égal à **40°.**

Pour réaliser la sculpture qui vient d'être présentée sur une bande de roulement plate, on emploie un moule dont une partie seulement est représentée de façon schématique avec les figures **3A** à **3C.**

Sur la figure **3A,** on aperçoit, en coupe transversale, une partie seulement d'un moule **20** sur lequel sont montés fixes des premiers éléments moulants ayant la forme de lames planes minces **21** pour le moulage des incisions **10.** Ces lames **21** comportent des parois latérales planes **22** pour le moulage des parois principales des incisions **10,** ces parois latérales **22** étant limitées par des parois d'extrémités **23.** Une encoche **24** est prévue sur la partie de la paroi d'extrémité **22** la plus éloignée de la surface de moulage **25** du moule **20** pour mouler des parties de gomme **14** en fond d'incision. Il est à noter que le démoulage de ces parties **14** ne pose aucune difficulté particulière.

Les différentes lames **21** peuvent être réalisées, par exemple, en métal ou dans un matériau conférant une rigidité suffisante auxdites lames pour permettre la pénétration dans la gomme crue d'une bande au moment de la fermeture du moule.

En outre, un deuxième élément moulant est monté sur le moule pour le moulage d'une rainure **2** et se présente sous la forme d'une nervure **26.** Cette nervure **26** comporte une première partie moulante **27** faisant saillie sur la surface **31** du moule et s'étendant dans la direction longitudinale (perpendiculaire au plan de la figure), et prolongée par une deuxième partie **28** destinée à être montée à l'intérieur d'un logement **29** prévu dans le moule **20**. La deuxième partie **28** a pour fonction de lier l'élément moulant **26** au moule **20** de manière à autoriser un déplacement relatif limité de cet élément moulant par rapport audit moule dans une direction qui est perpendiculaire à la surface de moulage **31** dudit moule (cette direction correspondant sensiblement à la direction de moulage/démoulage).

Des épaulements **25** sont prévus sur la deuxième partie **28** de la nervure **26** pour coopérer avec des épaulements **25'** prévus sur la pièce de moule **20** de façon à limiter le déplacement de cette deuxième partie **28** à l'intérieur du logement **29.**

La partie moulante **27** de l'élément moulant **26** comporte deux parois latérales **29** destinées au moulage des parois latérales en contre dépouille des nervures **3** de la bande.

Dans la configuration de moulage, montrée à la figure **3A**, une partie de la paroi d'extrémité **23** d'une lame **21** est en contact avec une paroi latérale **29** de l'élément moulant **26** et coopère avec ledit élément et la surface **31** du moule pour délimiter un orifice **30** servant de passage à la gomme pendant le moulage d'une bande.

Après moulage et vulcanisation d'une bande de roulement avec ce moule, on procède au démoulage, c'est-à-dire à l'extraction des éléments moulants **21** et **26** hors de la bande; cette opération de démoulage est représentée de façon schématique avec les deux figures **3B** et **3C**.

Avant de décrire cette opération, on peut noter que si les premiers et deuxièmes éléments moulants étaient tous solidaires du moule, il serait évidemment impossible de procéder au démoulage de la bande de roulement sans rompre les parties de gomme **12** et **13** moulées dans les orifices **30.**

La figure **3B** montre la première partie du démoulage au cours de laquelle le moule **20** est déplacé dans sa direction de démoulage c'est-à-dire dans une direction sensiblement perpendiculaire à l'épaisseur de la bande; pendant ce mouvement les lames **21**, solidaires du moule **20**, sont extraites de la gomme.

Durant cette première phase du démoulage, les parties en gomme **12** et **13** moulées dans les orifices **30** exercent sur les parois latérales **29** de l'élément moulant **26** des efforts qui s'opposent à l'extraction dudit élément moulant hors de la bande. Sous l'action de ces efforts et compte tenu du montage mobile de cet élément moulant **26** à l'intérieur du logement **29**, les éléments moulants **26** se déplacent par rapport aux lames **21** en créant ainsi un passage pour le démoulage des parties de gomme **12, 13** moulées dans les orifices **30.**

En poursuivant le mouvement de translation du moule **20** dans la même direction, les épaulements **25** prévus sur l'élément moulant **26** viennent en butée sur les épaulements **25'** prévus à la surface du moule et l'élément moulant **26** est alors entraîné par le moule dans son déplacement. Dans ce dernier déplacement, montré avec la figure **3C,** les parois latérales de l'élément moulant **26** exercent des efforts sur les parties de gomme **12** et **13** qui, compte tenu du caractère élastique et déformable de la matière caoutchoutique constituant la bande, se déforment suffisamment pour permettre l'extraction totale de l'élément moulant **26** hors de la bande de roulement sans découper lesdites parties de gomme **12, 13.**

Le moule qui vient d'être décrit pour le moulage d'une bande de roulement plate peut être aisément adaptée au moulage d'une bande de roulement sous la forme d'un anneau ou bien directement sur un pneumatique pendant le moulage de ce dernier.

La figure **5** montre une autre variante d'un moule **50** selon l'invention et dans lequel deux orifices **51**, **52** sont délimités complètement par une paroi d'extrémité **53** d'une lame **54** et par les parois latérales **55'** et **56'** de deux nervures **55** et **56**. Tandis que la lame **54** est montée fixe dans le moule **50**, les deux nervures **55** et **56** sont montées mobiles dans des logements **57**, **58** prévus dans le moule, et des moyens sont prévus pour limiter la course de ces nervures au moment du démoulage.

Ce dispositif permet de mouler dans une bande de gomme un élément de relief **40** pourvu d'une incision **41** débouchant sur la surface de paroi **47** de cet élément **40** et sur toute la largeur dudit élément de relief à l'état neuf comme cela est visible sur la figure **4**. Sur cette figure **4** on distingue clairement que l'incision ne coupe pas les parois latérales **45** et **46** de l'élément de relief **40** entre des profondeurs **H1** et **H2** sur la paroi latérale **46** et entre des profondeurs **H1'** et **H2'** sur l'autre paroi latérale **45.** Par ailleurs, l'incision **41** n'est pas moulée jusqu'à la profondeur des rainures **42** mais s'arrête à une distance d du fond desdites rainures **42** qui peut être égale par exemple à la hauteur des témoins d'usure.

Le principe de réalisation d'un moule qui vient d'être décrit avec les deux variantes des figures **3** et **5** pour le moulage d'éléments de relief d'une bande de roulement ayant des parois en contre dépouille peut également être mis en oeuvre pour le moulage d'un élément de relief ne comportant aucune paroi latérale en contre dépouille.

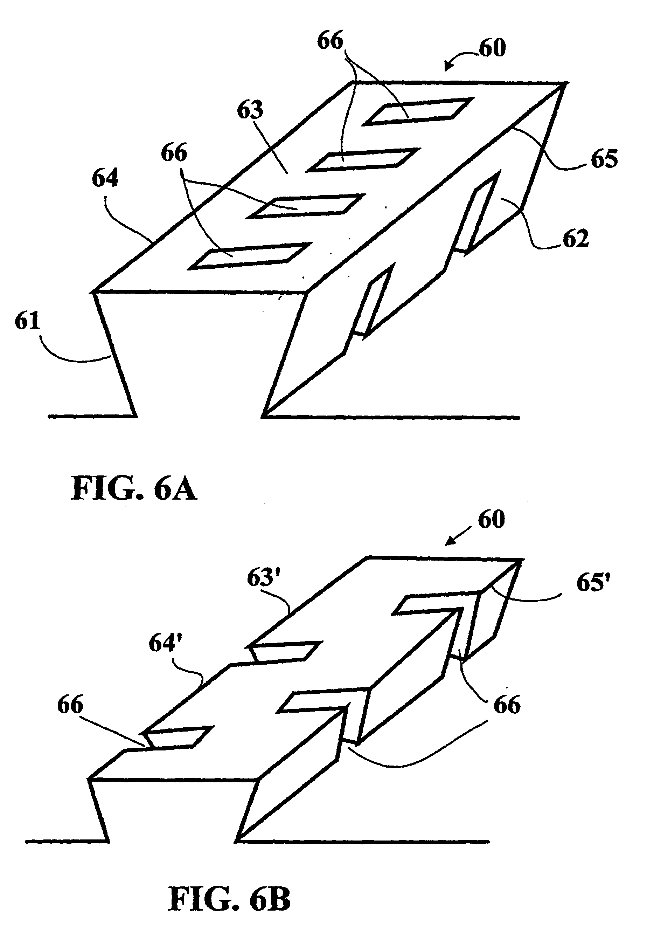

Les figures **6A** et **6B** montrent une variante de répartition d'incisions sur un élément de relief permettant de maintenir un niveau satisfaisant de rigidité audit élément quel que soit le niveau d'usure. Sur la figure **6A,** on voit un élément de relief **60** à l'état neuf qui est délimité par quatre parois latérales, deux desdites parois latérales **61** et **62** étant en contre dépouille par rapport à la surface de roulement **63** dudit élément de relief. L'intersection des parois latérales en contre dépouille **61** et **62** avec la surface de roulement **63** forme deux arêtes **64** et **65.**

Cet élément de relief **60** est pourvu de quatre incisions **66** débouchant sur la surface de roulement **63** de l'élément à l'état neuf, aucune desdites incisions ne coupant les arêtes **64** et **65** à l'état neuf, et en alternance ces incisions débouchent sur une paroi latérale **61** puis sur l'autre paroi latérale **62.**

Le même élément de relief est représenté sur la figure **6B** après usure partielle dudit élément correspondant au moment où les incisions **66** coupent les nouvelles arêtes **64'** et **65'** formées par les parois latérales **61** et **62** avec la nouvelle surface de roulement **63'.** On distingue clairement que les incisions **66** débouchent en alternance sur une paroi latérale puis sur l'autre. De cette façon, il est possible de conserver une rigidité suffisante à l'élément de relief **60** à partir de ce niveau d'usure et jusqu'à la limite d'usure possible dudit élément.

## Revendications

1. Bande de roulement **(1)** pour pneumatique pourvue d'une sculpture comportant une pluralité d'éléments de relief **(3, 4)** délimités par des rainures **(2),** chaque élément de relief étant pourvu d'une paroi de surface **(6)** destinée à venir en contact avec le sol au cours du roulage et d'au moins deux parois latérales **(7, 8)** en contre dépouille par rapport à la paroi de surface, l'intersection de chacune des parois latérales avec la paroi de surface formant une arête **(5)**, la bande de roulement étant **caractérisée en ce que** :
• au moins un élément de relief **(3)** est pourvu d'au moins une incision **(10)** débouchant sur sa paroi de surface **(6)** et sur au moins une de ses parois latérales **(7, 8)** et
• **en ce que** la/les incision(s) **(10)** ne coupe(nt) pas l'arête **(5)** commune à ladite paroi de surface et à ladite paroi latérale au moins entre une première profondeur **H1** et une seconde profondeur **H2, H2** étant supérieure à **H1,** ces profondeurs **H1** et **H2** étant mesurées perpendiculairement à la paroi de surface de l'élément et correspondant à des niveaux d'usure différents de la bande de roulement.

2. Bande de **roulement (1)** pour pneumatique selon la revendication **1** caractérisée en ce la profondeur **H2** est comprise entre **40%** et **90%** de la profondeur P de la rainure **(2)** délimitant la paroi latérale **(7, 8)** de l'élément de relief **(3)** dans laquelle débouche au moins une incision **(10).**

3. Bande de roulement **(1)** pour pneumatique selon les revendications **1** ou **2 caractérisée en ce qu'**au moins une incision **(10)** débouche sur les deux parois latérales **(7, 8)** de l'élément de relief **(3)** au moins entre des premières profondeurs **H1, H1'** et des secondes profondeurs **H2, H2',** ces profondeurs correspondant à des niveaux d'usure différents de ladite bande de roulement.

4. Bande de roulement **(1)** pour pneumatique selon l'une des revendications **1** à **3 caractérisée en ce que** au moins sur un élément de relief les incisions **(10)** ne coupent pas les arêtes dudit élément quand ladite bande est neuve.

5. Bande de roulement **(1)** selon l'une des revendications **1** à **4 caractérisée en ce que** les éléments de relief sont des nervures **(3)** orientées quasiment dans la direction longitudinale de ladite bande, chaque nervure **(3)** comportant une pluralité d'incisions **(10)** débouchant sur sa paroi de surface **(6)** et sur ses parois latérales **(7, 8),** lesdites incisions **(10)** ne coupant pas les arêtes **(5)** de ladite nervure **(3)** au moins entre un première profondeur **H1** et une seconde profondeur **H2,** plus grande que **H1,** ces profondeurs **H1** et **H2,** mesurées perpendiculairement à la paroi de surface de l'élément, correspondant à des niveaux d'usure différents de la bande de roulement.

6. Bande de roulement (1) selon l'une des revendications **1** à **5 caractérisée en ce qu'**au moins un élément de relief comporte à l'état neuf au moins deux incisions **(10),** chacune desdites incisions débouchant sur la paroi de surface **(6)** et sur une seule des parois latérales **(7, 8)** dudit élément de relief et **en ce que** lesdites incisions **(10)** ne coupent pas les arêtes dudit élément au moins entre une première profondeur **H1** et une seconde profondeur **H2,** ces profondeurs correspondant à des niveaux d'usure différents de la bande de roulement, lesdites incisions débouchant en alternance sur une paroi latérale puis sur l'autre.

7. Bande de roulement **(1)** selon l'une des revendications **1** à **6 caractérisée en ce que** les traces sur la paroi de surface des incisions ne coupant pas les arêtes des éléments de relief entre **H1** et **H2** ont des orientations moyennes avec la direction longitudinale de la bande au moins égales à **40°.**

8. Pneumatique pourvue d'une bande de roulement selon l'une des revendications **1** à **7**.

9. Pièce d'un moule **(20, 50)** pour mouler une partie d'une bande de roulement d'un pneumatique, ladite pièce de moule **(20, 50)** comprenant une surface de moulage **(31, 50')** sur laquelle font saillie des éléments de moulage **(21, 54, 26, 55, 56)** pour mouler des découpures dans la bande, chacun desdits éléments de moulage étant pourvus de faces latérales **(22, 29, 55', 56')** et de faces d'extrémité **(23, 53)** limitant lesdites faces latérales, cette pièce de moule pouvant être animée d'un mouvement dans une direction de moulage/démoulage, ladite pièce de moule étant **caractérisée en ce que** :
- au moins une face latérale **(29, 56, 56')** d'un élément de moulage **(26, 55, 56)** et une face d'extrémité **(23, 53)** d'un autre élément de moulage **(21, 54)** de la pièce de moule **(20, 50)** coopèrent de manière à être en contact et à délimiter, au moins partiellement, un orifice **(30, 51, 52)** s'étendant entre une profondeur **H1** et une profondeur **H2 (H2** étant strictement supérieure à **H1)** pour laisser passer la gomme pendant le moulage d'une bande de roulement, lesdites profondeurs **H1** et **H2** étant mesurées à partir de et perpendiculairement à la surface de moulage **(31, 50')** de la pièce de moule **(20, 50),** et
- l'un desdits éléments de moulage **(26, 56, 56')** en contact avec l'autre élément moulant **(21, 54)** est monté mobile par rapport à la pièce de moule **(20)** et à cet autre élément moulant **(21, 54)** suivant une direction voisine ou identique à la direction de moulage/démoulage de la pièce de moule **(20)**, afin que, pendant une première phase du démoulage consistant à déplacer la pièce de moule dans sa direction de démoulage, les efforts résultants exercés par la gomme moulée dans chaque orifice **(30, 51, 52)** sur l'élément moulant mobile **(26, 56, 56')** contraignent ledit élément à rester dans la bande et ainsi à ne plus être en contact avec l'autre élément moulant **(21, 54)** de façon à permettre dans une deuxième phase du démoulage, l'extraction de l'élément moulant mobile hors de la bande et ainsi achever le démoulage sans rupture de la gomme moulée dans chaque orifice **(30, 51, 52).**

10. Pièce d'un moule **(20)** selon la revendication **9 caractérisée en ce qu'**au moins un des éléments moulant mobile **(26)** est destiné à mouler des parois en contre dépouille d'éléments de relief de la sculpture d'une bande de roulement et **en ce que** lesdits éléments de moulage sont montés, dans des logements prévus sur la pièce de moule **(20)**, mobiles dans la direction de démoulage par rapport à ladite pièce de moule **(20)** pour permettre le démoulage.

## Patentansprüche

1. Lauffläche (1) für einen Reifen, die mit einem Profil versehen ist, das eine Vielzahl vorspringender Elemente (3, 4) aufweist, die durch Rillen (2) begrenzt sind, wobei jedes vorspringende Element mit einer Oberflächenwand (6), die dazu bestimmt ist, mit dem Boden im Verlauf des Abrollens in Kontakt zu gelangen, und mit mindestens zwei bezüglich der Oberflächenwand hinterschnittenen Seitenwänden (7, 8) versehen ist, wobei der Schnitt zwischen jeder der Seitenwände mit der Oberflächenwand eine Kante (5) bildet, **dadurch gekennzeichnet, daß**:
• mindestens ein vorspringendes Element (3) mit mindestens einem Einschnitt (10) versehen ist, der auf der Oberflächenwand (6) und auf mindestens einer seiner Seitenwände (7, 8) mündet, und
• daß der/die Einschnitt(e) (10) die der genannten Oberflächenwand und der genannten Seitenwand gemeinsame Kante (5) mindestens zwischen einer ersten Tiefe H1 und einer zweiten Tiefe H2 nicht schneidet bzw. schneiden, wobei H2 größer ist als H1, und wobei diese Tiefen H1 und H2 senkrecht zu der Oberflächenwand des Elements gemessen sind und unterschiedlichen Abnutzungsniveaus der Lauffläche entsprechen.

2. Lauffläche (1) für Reifen nach Anspruch 1, **dadurch gekennzeichnet, daß** die Tiefe H2 zwischen 40% und 90% der Tiefe P der Rille (2) liegt, die die Seitenwand (7, 8) des vorspringenden Elements (3) begrenzt, in welche mindestens ein Einschnitt (10) einmündet.

3. Lauffläche (1) für Reifen nach den Ansprüchen 1 oder 2, **dadurch gekennzeichnet, daß** mindestens ein Einschnitt (10) auf beiden seitlichen Wänden (7, 8) des vorspringenden Elements (3) mindestens zwischen ersten Tiefen H1, H1' und zweiten Tiefen H2, H2' einmündet, wobei diese Tiefen Abnutzungsniveaus der genannten Lauffläche entsprechen.

4. Lauffläche (1) für Reifen nach einem der Ansprüche 1 bis 3, **dadurch gekennzeichnet, daß** bei mindestens einem vorspringenden Element die Einschnitte (10) nicht die Kanten des genannten Elements schneiden, wenn die genannte Lauffläche neu ist.

5. Lauffläche (1) für Reifen nach einem der Ansprüche 1 bis 4, **dadurch gekennzeichnet, daß** die vorspringenden Elemente Rippen (3) sind, die gewissermaßen in der Längsrichtung der genannten Lauffläche ausgerichtet sind, wobei jede Rippe (3) eine Vielzahl von Einschnitten (10) aufweist, die auf ihrer Oberflächenwand (6) und auf ihren Seitenwänden (7, 8) einmünden, wobei die genannten Einschnitte (10) mindestens zwischen einer ersten Tiefe H1 und einer zweiten Tiefen H2, die größer ist als H1, nicht die Kanten (5) der genannten Rippe (3) schneiden, und wobei diese Tiefen H1 und H2, senkrecht zur Oberflächenwand des Elements gemessen, unterschiedlichen Abnutzungsniveaus der Lauffläche entsprechen.

6. Lauffläche (1) für Reifen nach einem der Ansprüche 1 bis 5, **dadurch gekennzeichnet, daß** mindestens ein vorspringendes Element in neuem Zustand mindestens zwei Einschnitte (10) aufweist, wobei jeder der genannten Einschnitte an der Oberflächenwand (6) und nur einer der Seitenwände (7, 8) des genannten, vorspringenden Elements einmündet, und daß die genannten Einschnitte (10) die Kanten des genannten Elements mindestens zwischen einer ersten Tiefe H1 und einer zweiten Tiefe H2 nicht schneiden, wobei diese Tiefen unterschiedlichen Abnutzungsniveaus der Lauffläche entsprechen, und wobei die genannten Einschnitte alternierend auf einer Seitenwand und dann auf der anderen einmünden.

7. Lauffläche (1) für Reifen nach einem der Ansprüche 1 bis 6, **dadurch gekennzeichnet, daß** die Verläufe der Einschnitte auf der Oberflächenwand, die die Kanten der vorspringenden Elemente zwischen H1 und H2 schneiden, mittlere Ausrichtungen zur Längsrichtung der Lauffläche aufweisen, die mindestens 40° betragen.

8. Reifen, der mit einer Lauffläche nach einem der Ansprüche 1 bis 7 versehen ist.

9. Stück eines Formwerkzeugs (20, 50) zum Abformen eines Teils einer Lauffläche eines Reifens, wobei das genannte Stück eines Formwerkzeugs (20, 50) eine Abform-Oberfläche (31, 50') aufweist, auf der Abformelemente (21, 54, 26, 55, 56) zum Abformen der Ausschnitte in der Lauffläche abstehen, jedes der genannten Abformelemente mit seitlichen Flächen (22, 29, 55', 56') und Endflächen (23, 53) versehen ist, die die genannten seitlichen Flächen begrenzen, dieses Stück des Formwerkzeugs zu einer Bewegung in einer Abform-/Ausformrichtung angeregt werden kann und das genannte Stück des Formwerkzeugs **dadurch gekennzeichnet ist, daß**:
- mindestens eine seitliche Fläche (29, 56, 56') eines Abformelements (26, 55, 56) und eine Endfläche (23, 53) eines anderen Abformelements (21, 54) des Stücks des Formwerkzeugs (20, 50) derart zusammenwirken, daß sie in Berührung treten und mindestens teilweise eine Öffnung (30, 51, 52) begrenzen, die sich zwischen einer Tiefe H1 und einer Tiefe H2 erstreckt (wobei H2 strikt größer ist als H1), um den Gummi während des Abformens einer Lauffläche hindurchtreten zu lassen, wobei die Tiefen H1 und H2 von der Abform-Oberfläche (31, 50') des Stücks des Formwerkzeugs (20, 50) und senkrecht zu dieser gemessen wird, und
- das eine der genannten Abformelemente (26, 56, 56'), das in Berührung mit dem anderen, abformenden Element (21, 54) steht, bezüglich des Stücks des Formwerkzeugs (20) und dieses anderen, abformenden Elements (21, 54) in einer Richtung beweglich und angebracht ist, die der Richtung des Abformens/Ausformens des Stücks des Formwerkzeugs (20) naheliegt oder identisch mit dieser ist, damit während einer ersten Phase des Ausformens, die darin besteht, das Stück des Formwerkzeugs in seiner Ausformrichtung zu versetzen, die resultierenden Kräfte, die durch den abgeformten Gummi in jeder Öffnung (30, 51, 52) auf das bewegliche, abformende Element (26, 56, 56') ausgeübt werden, das genannte Element zwingen, in der Lauffläche zu verbleiben und so nicht mehr in Berührung mit dem anderen, abformenden Element (21, 54) zu stehen, um auf diese Weise in einer zweiten Phase des Ausformens das Herausziehen des beweglichen, abformenden Elements aus der Lauffläche zu gestatten und so das Ausformen ohne Reißen des in jeder Öffnung (30, 51, 52) abgeformten Gummis fertigzustellen.

10. Stück eines Formwerkzeugs (20) nach Anspruch 9, **dadurch gekennzeichnet, daß** mindestens eines der beweglichen, abformenden Elemente (26) dazu bestimmt ist, hinterschnittene, vorspringende Elemente des Profils einer Lauffläche abzuformen, und daß die genannten, abformenden Elemente in Sitzen, die auf dem Stück des Formwerkzeugs (20) vorgesehen sind, in Ausformrichtung bezüglich des genannten Stücks des Formwerkzeugs (20) beweglich angebracht sind, um das Ausformen zu gestatten.

## Claims

1. A tread (1) for a tyre which is provided with a tread pattern comprising a plurality of elements in relief (3, 4) defined by grooves (2), each element in relief being provided with a surface wall (6) intended to come into contact with the ground during travel, and at least two lateral walls (7, 8) undercut relative to the surface wall, the intersection of each of the lateral walls with the surface wall forming a ridge (5), the tread being **characterised in that**:
- at least one element in relief (3) is provided with at least one incision (10) opening on to the surface wall (6) thereof and on to at least one of its lateral walls (7, 8), and
- **in that** the incision(s) (10) do(es) not cut into the ridge (5) common to said surface wall and to said lateral wall at least between a first depth H1 and a second depth H2, H2 being greater than H1, these depths H1 and H2 being measured perpendicular to the surface wall of the element and corresponding to different levels of wear of the tread.

2. A tread (1) for a tyre according to Claim 1, **characterised in that** the depth H2 lies between 40% and 90% of the depth P of the groove (2) defining the lateral wall (7, 8) of the element in relief (3) into which at least one incision (10) opens.

3. A tread (1) for a tyre according to Claims 1 or 2, **characterised in that** at least one incision (10) opens on to the two lateral walls (7, 8) of the relief element (3) at least between first depths H1, H1' and second depths H2, H2', these depths corresponding to different levels of wear of said tread.

4. A tread (1) for a tyre according to one of Claims 1 to 3, **characterised in that** at least on one element in relief the incisions (10) do not cut into the ridges of said element when said tread is new.

5. A tread (1) according to one of Claims 1 to 4, **characterised in that** the elements in relief are ribs (3) oriented virtually in the longitudinal direction of said tread, each rib (3) comprising a plurality of incisions (10) opening on to its surface wall (6) and on to its lateral walls (7, 8), said incisions (10) not intersecting the ridges (5) of said rib (3) at least between a first depth H1 and a second depth H2, greater than H1, these depths H1 and H2, measured perpendicular to the surface wall of the element, corresponding to different levels of wear of the tread.

6. A tread (1) according to one of Claims 1 to 5, **characterised in that** at least one element in relief comprises, when new, at least two incisions (10), each of said incisions opening on to the surface wall (6) and on to only one of the lateral walls (7, 8) of said element in relief, and **in that** said incisions (10) do not cut into the ridges of said element at least between a first depth H1 and a second depth H2, these depths corresponding to different levels of wear of the tread, said incisions opening alternately on to one lateral wall and then on to the other.

7. A tread (1) according to one of Claims 1 to 6, **characterised in that** the traces on the surface wall of the incisions which do not cut into the ridges of the elements in relief between H1 and H2 have average orientations with the longitudinal direction of the tread of at least 40°.

8. A tyre provided with a tread according to one of Claims 1 to 7.

9. A mould part (20, 50) for moulding part of a tread of a tyre, said mould part (20, 50) comprising a moulding surface (31, 50') from which moulding elements (21, 54, 26, 55, 56) for moulding cutouts in the tread project, each of said moulding elements being provided with lateral faces (22, 29, 55', 56') and end faces (23, 53) defining said lateral faces, this mould part being able to be moved in a direction of moulding/demoulding, said mould part being **characterised in that**:
- at least one lateral face (29, 56, 56') of a moulding element (26, 55, 56) and one end face (23, 53) of another moulding element (21, 54) of the mould part (20, 50) cooperate so as to be in contact and to define, at least in part, an orifice (30, 51, 52) extending between a depth H1 and a depth H2 (H2 being strictly greater than H1) to allow the rubber to pass during the moulding of a tread, said depths H1 and H2 being measured from and perpendicular to the moulding surface (31, 50') of the mould part (20, 50), and
- one of said moulding elements (26, 56, 56') in contact with the other moulding element (21, 54) is mounted to be mobile relative to the mould part (20) and to this other moulding element (21, 54) in a direction close or identical to the direction of moulding/demoulding of the mould part (20), so that, during a first phase of the demoulding which consists in moving the mould part in its demoulding direction, the resultant forces exerted by the rubber moulded in each orifice (30, 51, 52) on the mobile moulding element (26, 56, 56') force said element to remain in the tread and thus no longer to be in contact with the other moulding element (21, 54) so as to permit, in a second phase of the demoulding, the extraction of the mobile moulding element from the tread and thus to finish the demoulding without breaking the rubber moulded in each orifice (30, 51, 52).

10. A mould part (20) according to Claim 9, **characterised in that** at least one of the mobile moulding elements (26) is intended to mould undercut walls of elements in relief of the tread pattern of a tread and **in that** said moulding elements are mounted, in housings provided on the mould part (20), so as to be mobile in the direction of demoulding relative to said mould part (20) to permit demoulding.
